# EUROPEAN PATENT APPLICATION

(11) **EP 2 806 350 A1**
(43) Date of publication of application: **26.11.2014**
(21) Application number: 14169396.0
(22) Date of filing: 22.05.2014
(51) Int. Cl.: G06F 3/12, G06F 9/445, G06F 9/44

(54) **Image forming firmware web-based user interface localization**

(30) Priority: 23.05.2013 JP 2013109311
(71) Applicant: Kyocera Document Solutions Inc., Chuo-ku Osaka 540-8585 (JP)
(72) Inventor: Sekioka, Naoki, Osaka, 540-8585 (JP)
(74) Representative: Trinks, Ole

(57) **Abstract**

An image forming apparatus (1), including a fist storage device (12), a webpage generation unit (32a), and a web server (31). The first storage device (12) independently stores controller firmware (21), including a controller program, and language firmware (22), the language firmware (22) or the controller firmware (21) including, for different languages, a corresponding language file (41-1; 41-2; 41-N) and corresponding attribute information. The webpage generation unit (32a) reads the language file (41-1; 41-2; 41-N), corresponding to a language, specified from the languages, and the attribute information, corresponding to the specified language, and generates webpage data, based on the read language file (41-1; 41-2; 41-N) and the read attribute information. The web server (31) transmits, to a web browser (3a), the webpage data, generated by the webpage generation unit (32a).

## Description

### FIELD

Unless otherwise indicated herein, the description in this field section or the background section is not prior art to the claims in this application and is not admitted to be prior art by inclusion in this section. The present invention relates to an image forming apparatus and a method for adding a webpage language.

### BACKGROUND

A typical image forming apparatus includes data, such as messages to be displayed, as a language file depending on a language to be used by a user, and provides, by a web server, a webpage based on the language file to a web browser of a user terminal.

The typical image forming apparatus includes language files for a plurality of languages, and provides the webpage in the language selected on the web browser side.

The typical image forming apparatus includes the language files in controller firmware for realizing a controller in the image forming apparatus. Further, the controller firmware includes template data incorporating attribute information corresponding to a language, such as a writing direction (right to left (RtoL) and left to right (LtoR)), and presence and absence of furigana. Furigana is/are syllabic character(s) for reading aid in a respective language. Also, the term furigana representation is used in this regard. The controller generates, based on the template data and the language file, the webpage data in the language through process based on the identified attribute information. For example, the template data is described in the hypertext markup language (HTML) so that the webpage is displayed in a format corresponding to the attribute information thereof.

The typical image forming apparatus may sometimes be required to have an ability to provide the webpage in the new language other than the default language. In this case, the language file for the new language needs to be added to the firmware. Further, process based on the attribute information is described in the template data in the controller firmware, and the controller firmware thus needs to be updated in order to enable process based on attribute information corresponding to the new language.

Thus, the controller firmware needs to be updated each time the language for the webpage is added in the typical image forming apparatus.

However, a period of time required for updating the controller firmware is long, and the image forming apparatus is not available during the update time. Further, if the update of the controller firmware fails, the image forming apparatus may become no longer available. Therefore, the frequency of the update of the controller firmware should be preferably reduced.

### SUMMARY

The present invention relates to an image forming apparatus and a method of adding a webpage language without updating controller firmware.

An image forming apparatus according to an embodiment of the present invention includes a first storage device, a webpage generation unit, and a web server.

The first storage device independently stores controller firmware, including a controller program, and language firmware, the language firmware or the controller firmware including, for each language, a corresponding language file and corresponding attribute information.

The webpage generation unit reads the language file, corresponding to a specified language, and the attribute information, corresponding to the specified language in the language firmware, and generates webpage data based on the read language file and the read attribute information.

The web server transmits, to a web browser, the webpage data, generated by the webpage generation unit.

Additional features and advantages are described herein, and will be apparent from the following Detailed Description and the figures.

### BRIEF DESCRIPTION OF FIGURES

All drawings are intended to illustrate some aspects and examples of the present invention. The drawings described are only schematic and are non-limiting, and are not necessarily drawn to scale.
FIG. 1 is a schematic diagram illustrating a block configuration of an image forming apparatus according to an embodiment of the present invention.
FIG. 2 is a schematic diagram illustrating an exemplary configuration of language firmware in the image forming apparatus.
FIG. 3 is a schematic diagram illustrating an exemplary configuration of a language file and an attribute file in the language firmware.

### DETAILED DESCRIPTION

Various embodiments are described below with reference to the figures. It should be understood, however, that numerous variations from the depicted arrangements and functions are possible while remaining within the scope and spirit of the claims. For instance, one or more elements may be added, removed, combined, distributed, substituted, re-positioned, re-ordered, and/or otherwise changed. Further, where this description refers to one or more functions being implemented on and/or by one or more devices, one or more machines, and/or one or more networks, it should be understood that one or more of such entities could carry out one or more of such functions by themselves or in cooperation, and may do so by application of any suitable combination of hardware, firmware, and/or software. For instance, one or more processors may execute one or more sets of programming instructions as at least part of carrying out one or more of the functions described herein.

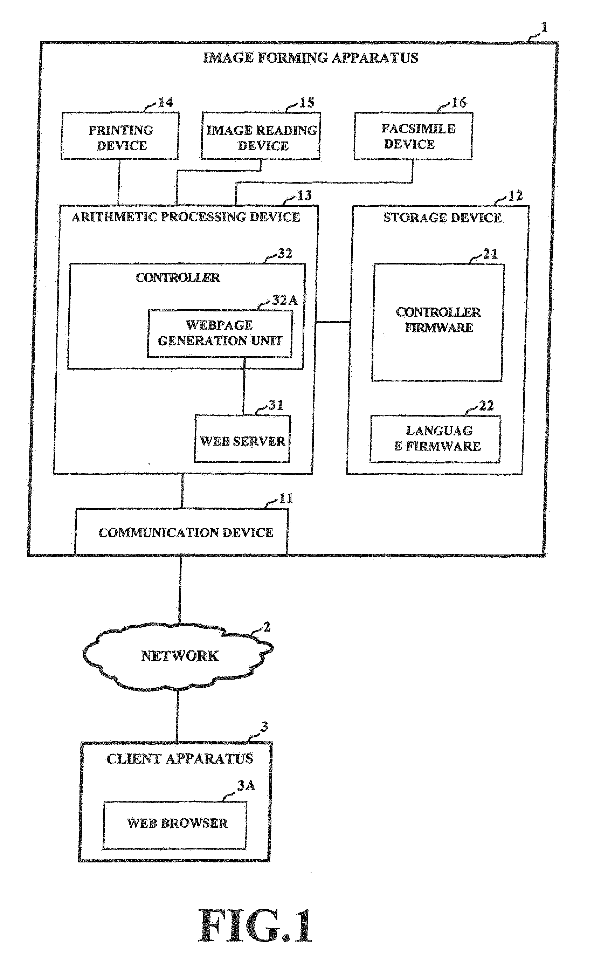

FIG. 1 is a schematic diagram illustrating a block configuration of an image forming apparatus 1 according to an embodiment of the present invention.

The image forming apparatus 1 illustrated in FIG. 1 includes a communication device 11, a first storage device 12, an arithmetic processing device 13, a printing device 14, an image reading device 15, and a facsimile device 16.

The image forming apparatus 1 is coupled to a network 2 such as a local area network, and communicates to/from a web browser 3a of a client apparatus 3 coupled to the network 2 by using a web server 31 in the image forming apparatus 1 in conformity with the hypertext transfer protocol (HTTP). The web server 31 receives a transmission request for a webpage at a specified uniform resource locator (URL).

The communication device 11, which is a network interface or the like, is coupled to the network 2 and performs data communication in conformity with a specified protocol.

The first storage device 12 is a nonvolatile and rewritable storage device that stores firmware. The first storage device 12 independently stores controller firmware 21 and language firmware 22.

The controller firmware 21 includes a controller program and various pieces of data.

It should be noted that the controller firmware 21 includes template data for webpage data. The template data is described in the HTML, the JavaScript, or the like. It should be noted that the template data does not include attribute information unique to a language.

The language firmware 22 preferably includes language files for respective languages, and pieces of attribute information respectively unique to the languages.

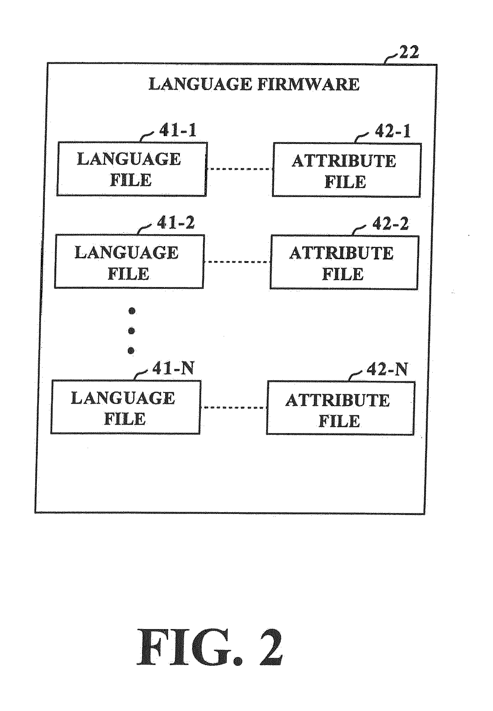

FIG. 2 is a schematic diagram illustrating an exemplary configuration of the language firmware 22 in the image forming apparatus 1.

As illustrated in FIG. 2, the language firmware 22 includes preferably one language file 41-i and one attribute file 42-i for one language according to this embodiment. The attribute file 42-i includes attribute information on the language.

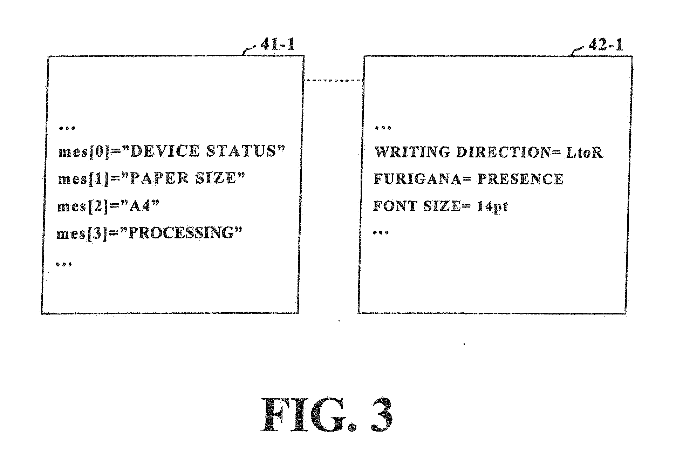

FIG. 3 is a schematic diagram illustrating an exemplary configuration of the language file 41-1 and the attribute file 42-1 in the language firmware 22. The language file 41-1 and the attribute file 42-1 are respectively a language file and an attribute file for the Japanese language. The language file 41-i includes messages (texts) described in the corresponding language, and the attribute file 42-i includes the attribute information such as a writing direction, the presence and absence of furigana (syllabic characters for reading aid), and a font size.

In other words, the attribute information is included in the attribute file 42-i different from the language file 41-i, and the attribute file 42-i is included in the language firmware 22 according to this embodiment. It should be noted that the language file 41-i and the attribute file 42-i may be described in JavaScript or may be text files.

The arithmetic processing device 13 is a computer including a central processing unit (CPU), a read only memory (ROM), and a random access memory (RAM). The arithmetic processing device 13 loads, on the RAM, the programs stored in the ROM and the first storage device 12, and the CPU executes the programs, to thereby form various processing units.

In the arithmetic processing device 13, the web server 31 is realized, and the controller 32 is realized by executing the controller program in the control firmware 21.

The web server 31 uses the communication device 11 to carry out the data communication in conformity with the HTTP.

The controller 32 performs various types of process, and controls an internal device, such as the printing device 14, the image reading device 15, and the facsimile device 16.

It should be noted that the printing device 14 prints an image based on printing data received from an external apparatus such as the client apparatus 3, an image read by the image reading device 15, an image generated by the facsimile device 16, and the like. The image reading device 15 optically reads an original image from an original, and generates image data on the original image. The facsimile device 16 generates a facsimile signal based on an image based on the printing data received from the client apparatus 3, the image read by the image reading device 15, and the like, and transmits the generated signal. Further, the facsimile device 16 receives a facsimile signal from the outside, and generates an image based on the facsimile signal.

Moreover, the controller 32 includes a webpage generation unit 32a. The webpage generation unit 32a reads, from the language firmware 22, a language file 41-i corresponding to a language specified by the web browser 3a and attribute information (attribute information in an attribute file 42-i) corresponding to the specified language, and generates webpage data based on the read language file 41-i and attribute information. The webpage data generated by the webpage generation unit 32a is transmitted by the web server 31 to the web browser 3a which is a source of the transmission request for the webpage data. The attribute information described in the attribute file may be described in the language file. In this case, the attribute file is no longer necessary.

A description is now given of an operation of the image forming apparatus.

### (1) Operation for providing webpage

When the web server 31 receives a transmission request for a webpage from the web browser 3a, the webpage generation unit 32a uses template data, and a language file 41-i and an attribute file 42-i of a language specified by the web browser 3a to generate webpage data. Then, the web server 31 transmits the generated webpage data to the web browser 3a.

### (2) Operation for adding language available on webpage

When a language available on a webpage (hereinafter referred to as additional language) is added, for example, an update package including an update program, and a language file and an attribute file for the additional language is generated, and the update package is downloaded to the image forming apparatus 1 from the client apparatus 3, a server (not illustrated), or a recording medium (not illustarated).

Then, the update program is executed on the arithmetic processing device 13, and the language file for the additional language and the attribute information (attribute file 42-i) for the additional language are added to the language firmware 22 based on the update program.

As described above, the first storage device 12 according to this embodiment independently stores the controller firmware 21 including the controller program, and the language firmware 22 including, for each of the languages, a language file 41-i and attribute information unique to the language. The webpage generation unit 32a reads the language file 41-i corresponding to the specified language and the attribute information corresponding to the specified language in the language firmware 22, and generates webpage data based on the read language file and attribute information.

According to this embodiment, a language available on a webpage can be added by simply changing the language firmware 22 separated from the controller firmware 21, and hence an update of the controller firmware 21 due to the addition of the language available on the webpage provided by the image forming apparatus 1 is not necessary.

While various aspects and embodiments have been disclosed herein, other aspects and embodiments are possible. Other designs may be used in which the above-described components are each present.

For example, the image forming apparatus 1 may include two storage devices. Then, the controller firmware 21 including language files for standard languages may be stored in the first storage device, and a language file for an additional language may be stored in the rewritable second storage device.

In other words, the arithmetic processing device 13 reads, from the first storage device, a language file for a standard language specified by the client apparatus 3 among the language files for one or more standard languages, and transmits the read language file to the client apparatus 3, while storing a different language file received from the client apparatus 3 in the second storage device

In the client apparatus 3, the standard language is translated into the different language, and the different language file is transmitted to the image forming apparatus 1. Further, the webpage generation unit 32a reads the language file from the second storage device, and generates specified webpage data based on the read language file. The web server 31 transmits the generated webpage data to the web browser 3a.

As a result, the specified webpage data is generated by using the language file stored in the second storage device, different from the first storage device 12 for the controller firmware 21. Further, a language file in the controller firmware 21 can be downloaded and edited, and the edited language file can be uploaded as a language file for a different language and registered as a language file. Thus, in the image forming apparatus 1, a language file for a language different from the standard languages can be added and a specified webpage can be displayed in the new language without updating the controller firmware 21.

It should be understood that various changes and modifications to the embodiments described herein will be apparent to those skilled in the art. Such changes and modifications may be made without departing from the spirit and scope of the present subject matter and without diminishing its intended advantages. It is therefore intended that such changes and modifications be covered by the appended claims.

## Claims

1. An image forming apparatus (1), comprising:
- a first storage device (12), configured to independently store controller firmware (21), the store controller firmware (21) including a controller program and language firmware (22), the language firmware (22) or the store controller firmware (21) including, for different languages a corresponding language file (41-1; 41-2; 41-N) and corresponding attribute information;
- a webpage generation unit (32a) configured to read the language file (41-1; 41-2; 41-N) corresponding to a language, specified from the different languages, and the attribute information corresponding to the specified language, and to generate webpage data based on the read language file (41-1; 41-2; 41-N) and the read attribute information; and
- a web server (31) configured to transmit, to a web browser (3a), the webpage data generated by the webpage generation unit (32a).

2. The image forming apparatus (1) according to claim 1,
wherein the attribute information is included in an attribute file (42-1; 42-2; 42-N), different from the language file (41-1; 41-2; 41-N), and wherein the attribute file (42-1; 42-2; 42-N) is included in the language firmware (22).

3. The image forming apparatus (1) according to claim 1,
wherein the attribute information is included in the language file (22).

4. The image forming apparatus (1) according to one of the claims 1 to 3, wherein the attribute information includes, for each of the different languages, information about at least one writing direction of the specified language and/or presence or absence of furigana.

5. The image forming apparatus (1) according to one of the claims 1 to 4, wherein the image forming apparatus (1) further comprises:
- a second storage device configured to store an additional language file.

6. The image forming apparatus (1) according to claim 5,
wherein the image forming apparatus (1) further comprises:
- an arithmetic processing device (13), configured to:
i) read, from the first storage device, a language file for a standard language, specified by a client apparatus (3), and
ii) transmit the read language file for the standard language to the client apparatus (3),
iii) receive a language file for a language different from the standard language specified by the client apparatus (3), and
iv) store, in the second storage device, the received language file for the different language for generating specified webpage data.

7. The image forming apparatus (1) according to claim 6,
wherein the arithmetic processing device (13) is a computer, including:
a central processing unit (CPU);
a read only memory (ROM); and
a random access memory (RAM),
wherein the arithmetic processing device (13) loads, on the random access memory (RAM), the programs stored in the read only memory (ROM) and
the first storage device (12), and the central processing unit (CPU) executes the programs.

8. The image forming apparatus (1) according to claim 5,
wherein the webpage generation unit (32a) is configured to read the language file from the second storage device, and generate the webpage data additionally based on the read language file from the second storage device.

9. A method for processing information about a webpage language, the method comprising the following steps:
- storing, independently, controller firmware (21), including a controller program, and language firmware (22), including, for different languages, a corresponding language file (41-1; 41-2; 41-N) and corresponding attribute information;
- reading the language file (41-1; 41-2; 41-N), corresponding to a language, specified from the languages, and the attribute information, corresponding to the specified language;
- generating webpage data based on the read language file (41-1; 41-2; 41-N) and the read attribute information;
- transmitting the generated webpage data to a web browser (3a).

10. The method according to claim 9,
wherein the method further comprises the step of:
- executing an update program.

11. The method according to claim 10,
wherein the method further comprises the step of:
- adding a language file (41-1; 41-2; 41-N) for an additional language and the attribute information, corresponding to the additional language, to the language firmware (22) by executing the update program.

12. The method according to one of the claims 9 to 11,
wherein the attribute information is included in an attribute file (42-1; 42-2; 42-N), different from the language file; and
wherein the attribute file (42-1; 42-2; 43-N) is included in the language firmware (22).

13. The method according to one of the claims 9 to 11,
wherein the attribute information is included in the language file (41-1; 41-2; 41-N).

14. The method according to one of the claims 9 to 13, wherein the attribute information includes, for each of the different languages, information about at least one writing direction of the specific language and/or presence or absence of furigana.
